# EUROPEAN PATENT APPLICATION

(11) **EP 2 034 451 A1**
(43) Date of publication of application: **11.03.2009**
(21) Application number: 07767487.7
(22) Date of filing: 25.06.2007
(51) Int. Cl.: G07B 15/00

(54) **AUTOMATIC TOLL RECEIVING SYSTEM WITH NO VEHICLE TYPE JUDGING DEVICE**

(30) Priority: 26.06.2006 JP 2006175414
(71) Applicant: Mitsubishi Heavy Industries, Ltd., Minato-ku Tokyo 108-8215 (JP)
(72) Inventor: KAGA, Tomoya, Kobe-shi, Hyogo 652-8585 (JP)
(74) Representative: Henkel, Feiler & Hänzel
(86) International application number: PCT/JP2007/062680
(87) International publication number: WO 2008/001714

(57) **Abstract**

An automatic toll collection system has: a camera for taking a picture of a vehicle which enters a traffic lane of a toll gate; a reading unit for reading vehicle type information and number plate information from a recording medium provided from the vehicle in the traffic lane; a matching unit for checking a matching of information regarding a number plate from the picture and the number plate information; and a calculation unit for calculating a toll based on the vehicle type information when a result of the checking is matched. When the result of the checking is not matched, a request to prompting an input of vehicle type information is issued to a clerk in the toll gate. By these construction, a automatic toll collection system which enables a prevention of misjudge of vehicle type by simple equipment.

## Description

### Technical Field

The present invention relates to an automatic toll collection system for a toll road.

### Background Art

A toll collection system for a toll road where users pay the toll by inputting a payment medium such as cash, credit card, and the like to an automatic toll collection apparatus is known. In such toll collection system, the vehicle type of a user is automatically identified by a vehicle classification unit. The automatic toll collection apparatus calculates the toll based on the identified vehicle type and collects the toll.

In Japanese Laid-Open Patent Application (JP-P2003-187279A), a toll collection system for a toll road is described. The toll collection system includes: a vehicle classification unit for identifying a vehicle type of a vehicle which arrived at an exit toll gate; an automatic toll collection machine for reading toll collection information recorded in a toll ticket, for calculating a toll based on the toll collection information when the identified vehicle type and the recorded vehicle type correspond each other, and for collecting the toll; a television camera for taking a picture of a vehicle passing through the exit toll gate; a monitoring panel for prompting a collection observer to identify the vehicle type by displaying a video picture taken by the television camera and the toll collection information when the identified vehicle type and the recorded vehicle type do not correspond to each other; and an automatic toll collection machine for calculating the toll based on the vehicle type determined by a collection observer on the basis of the video picture displayed in the monitoring panel and the toll collection information to perform collection processing of the toll.

### Disclosure of Invention

An object of the present invention is to provide an automatic toll collection system which enables reducing of erroneous determination of a vehicle type, in simple equipment.

Another object of the present invention is to provide an automatic toll collection system which enables reducing of irregularity on exchanging a recording medium issued at an entry gate, in simple equipment.

An automatic toll collection system according to the present invention includes; a number plate reading unit for taking a picture of a vehicle which enters a traffic lane in a toll gate and extracting exit number plate information from an area in the picture where a number plate is taken; a medium reading unit for reading vehicle information and number plate information from a recording medium provided from the vehicle in the traffic lane; a checking unit for checking matching of the exit number plate information and the number plate information; and a calculation unit for calculating a toll based on the vehicle information when a results of the matching is matched.

The automatic toll collection system according to the present invention includes; a vehicle detection sensor for detecting a vehicle existing in an upstream side of a toll collection machine in an exit toll gate. The number plate reading unit takes a picture in response to a detection of the vehicle by the vehicle detection sensor.

The automatic toll collection system according to the present invention includes; an output unit for outputting a predetermined output to a clerk in charge when the result of the checking is not matched; a collection unit for collecting inputted vehicle type information from the clerk in charge via an input device. The calculation unit performs calculation of a toll by using the inputted vehicle type information.

The automatic toll collection system according to the present invention includes; a vehicle classification unit for generating entrance vehicle type information showing a vehicle type of the vehicle which enters an entry toll gate; an entrance number plate reading unit for reading a number plate of the vehicle which enters the entry toll gate; an issuing unit for writing the entrance vehicle type information as the vehicle type information and the number plate read by the entrance number plate reading unit as the number plate information in the recording medium and issuing the recording medium. The number plate reading unit and the medium reading unit are installed in an exit toll gate placed in a downstream side under the entry toll gate.

In the automatic toll collection system according to the present invention, the medium reading unit reads vehicle type history information that is vehicle type information used for calculating a toll in each of a plurality of past passages, from the recording medium. The calculation unit calculates a toll by using the vehicle type information included in the vehicle type history information when the vehicle type history information satisfies a predetermined condition.

In the automatic toll collection system according to the present invention, the predetermined condition is a condition where all information showing a plurality of vehicle types included in the vehicle type history information are consistent.

A construction method of an automatic toll collection system according to the present invention includes: installing a toll collection machine for reading vehicle type information and number plate information from a recording medium submitted by a passenger of a vehicle to calculate a toll in a toll gate where a toll collection is performed based on a vehicle type identified by a person in charge; installing a camera for taking a picture of a vehicle on the upstream side of the toll collection machine in the toll gate; installing a program for calculating a toll into the toll collection machine based on the vehicle information when a result of matching information regarding a number plate extracted from the picture with the number plate information are matched.

According to the present invention, an automatic toll collection system which enables preventing erroneous determination of a vehicle type, in simple equipment, is provided.

Furthermore, according to the present invention, an automatic toll collection system which enables preventing irregularity on exchanging a recording medium issued at an entry gate, in a simple apparatus, is provided.

### Brief Description of Drawings

Fig. 1 shows a pattern diagram of a toll road;
Fig. 2 shows an arrangement of an exit toll gate;
Fig. 3 shows a toll calculation program;
Fig. 4 shows information written in a toll ticket;
Fig. 5 shows information recorded in an ETC card;
Fig. 6 shows an operation of an automatic toll collection system;
Fig. 7 shows an operation of an automatic toll collection system; and
Fig. 8 shows an arrangement of an exit toll gate.

### Best Mode for Carrying out the Invention

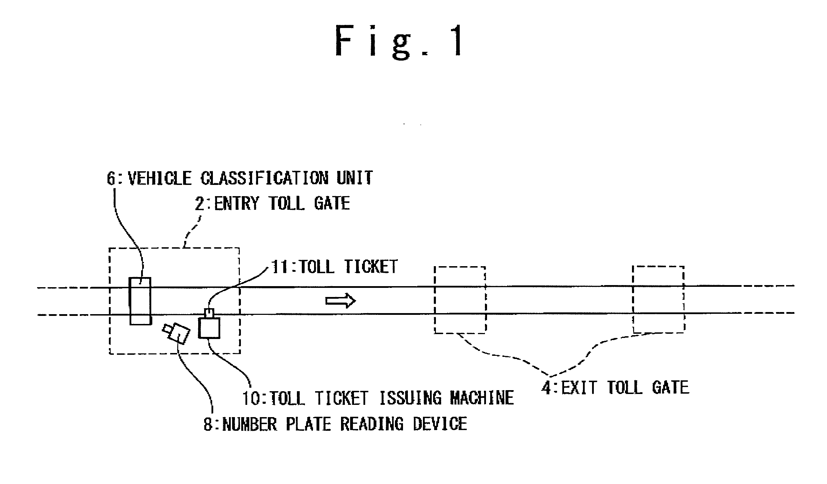

Referring to accompanying drawings, best modes for carrying out the invention will be described below. Fig. 1 shows a pattern diagram of a toll road for which an automatic toll collection system in the present embodiment is applied. An entry toll gate 2 is installed in the toll road. The entry toll gate 2 includes a vehicle classification unit 6, a number plate reading device 8, and a toll ticket issuing machine 10. A plurality of exit toll gates 4 are installed on a downstream side of the entry toll gate 2. The toll for using the toll road is determined depending on a vehicle type and the distance from the entry toll gate 2 to the exit toll gate 4.

The vehicle classification unit 6 detects a profile of a vehicle which enters the entry toll gate, exemplified by a vehicle length, a vehicle height, a vehicle width, and the number of axes of a vehicle, and generates vehicle type information showing the vehicle type of the vehicle based on the detected profile to transmit the information to the toll ticket issuing machine 10. The vehicle type information is classified into "compact vehicle," "mid-size vehicle," "full-size vehicle," "motorcycle," "unidentified vehicle type," and the like.

The number plate reading device 8 takes a picture of a vehicle existing on an upstream side above the toll ticket issuing machine 10 in the entry toll gate 2. And, an image recognition processing is executed to a taken video picture of the vehicle, then, number plate information that is information including text data of characters (numeric characters may be included) written in the number plate is generated to be transmitted to the toll ticket issuing machine 10.

The toll ticket issuing machine 10 issues toll tickets to each of the vehicles which enter the entry toll gate 2. The toll ticket issuing machine 10 writes vehicle type information received from the vehicle classification unit 6, number plate information received from the number plate reading device 8, entrance time showing the current time in the entry toll gate 2, and entry toll gate information for specifying the entry toll gate 2 in distinction from other entry toll gates into a toll ticket 11, and issues the ticket to the vehicle existing in a driving lane of the entry toll gate 2.

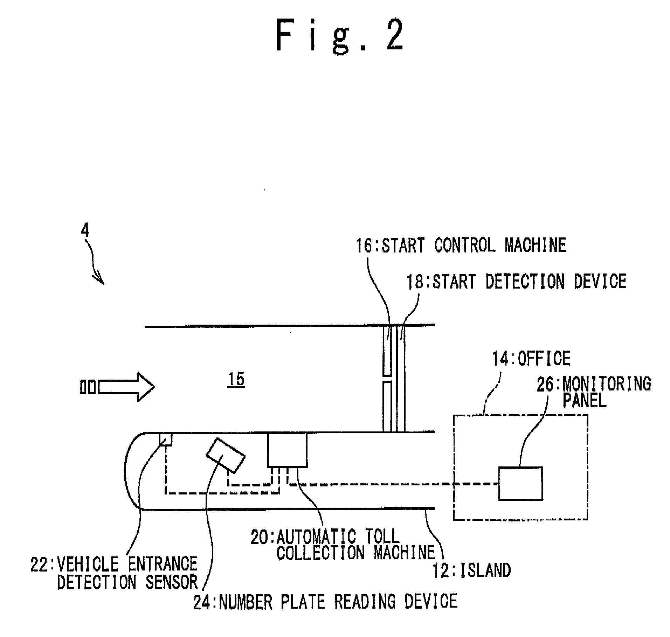

Fig. 2 shows an arrangement of the exit toll gate 4. The exit toll gate 4 includes a traffic lane 15 where vehicles pass. A start control machine 16 and a start detection device 18 are installed at an exit of the traffic lane 15 in the exit toll gate 4. A plurality of traffic lanes 15 are separated from each other by islands 12. A vehicle entrance detection sensor 22, a number plate reading device 24, and an automatic toll collection machine 20 are installed on the island 12.

In the exit toll gate 4, a vehicle classification unit for generating information showing a vehicle type based on characteristics of the vehicle is not installed. For this reason, the area of the island 12 is smaller compared to that of a case where the vehicle classification unit is installed.

In the case where a vehicle classification unit is installed, a long distance is required between the vehicle classification unit and the automatic toll collection machine 20 so that the length of a vehicle having long vehicle length such as a trailer can be measured. As a result, a length of the island 12 along the direction of travel is designed so as to be long. Since the vehicle classification unit is not installed in the exit toll gate 4 in the present embodiment, the length of the island 12 along the direction of travel can be short. The exit toll gate 4 like this can be installed in a site with a small area, and the period required for constructing the toll gate can be shortened.

The vehicle entrance detection sensor 22 generates a detection signal indicating the detection of a vehicle which enters an entrance of the exit toll gate 4, and transmits the signal to the automatic toll collection machine20. By taking a picture of the vehicle on an upstream side from the automatic toll collection machine 20 and executing an image recognition processing to the taken video picture, the number plate reading device 24 generates exit toll gate number plate information that is information showing characters (numeric characters may be included) written in a number plate to transmit the information to the automatic toll collection machine 20.

The automatic toll collection machine 20 is realized by a computer including an arithmetic and control unit, a memory device, an input device, an output device, and a communication device. The automatic toll collection machine 20 displays a toll to a vehicle in the traffic lane 15, receives a payment medium inputted from the vehicle such as cash, a credit card, and an ETC card, for example, and automatically makes settlement of the toll.

The start control machine 16 includes an openable and closable bar. Responding to a signal received from the automatic toll collection machine 20, the start control machine 16 controls the bar to be kept in either state of an open state or a close state. When the bar is in the close state, the bar prevents the vehicle existing in the traffic lane 15 from running away to a downstream side of the exit toll gate 4. When the bar is in the open state, the bar does not prevent the vehicle existing in the traffic lane 15 from running away to the downstream side of the exit toll gate 4.

An office 14 is provided in the exit toll gate 4. A clerk is staffed in the office 14. An monitoring panel 26 operated by the clerks is installed in the office 14. The monitoring panel 26 is realized by a computer including an arithmetic and control unit, a memory device, an input device, an output device, and a communication device. The monitoring panel 26 receives signals from the start control machine 16, the start detection device 18, the vehicle entrance detection sensor 22, the number plate reading device 24, and the automatic toll collection machine 20, monitors information showing operations and states of these apparatuses, stores the information into the memory device, and outputs the information to the output device such as a display.

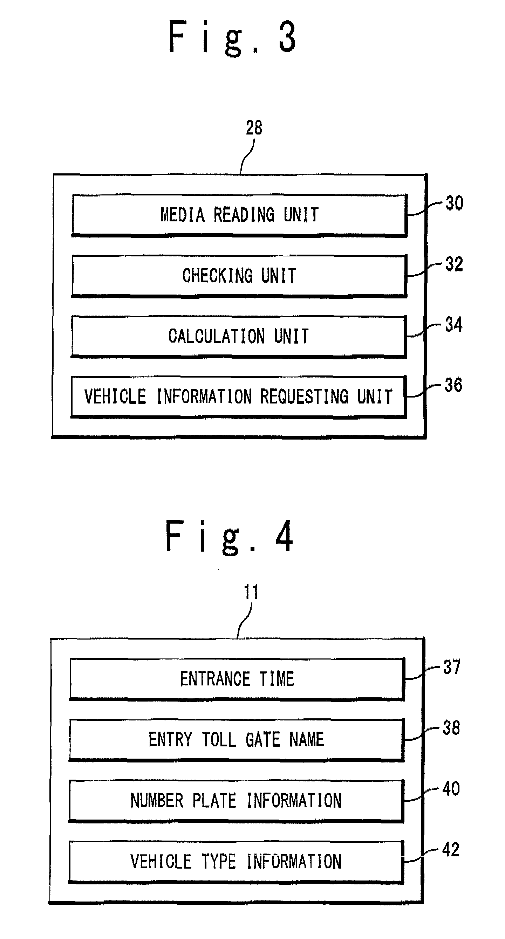

Fig. 3 shows a toll calculation program 28 stored in the memory device of the automatic toll collection machine 20. The toll calculation program 28 is a software product which is read and executed by the arithmetic and control device of the automatic toll collection machine 20. The toll calculation program 28 includes a media reading unit 30, a checking unit 32, a calculation unit 34, and a vehicle information requesting unit 36.

Fig. 4 shows information recorded in a toll ticket 11. The toll ticket 11 includes a magnetic stripe for magnetically retaining information and a storage medium which can be able to be read by a computer such as a semiconductor storage device, for example. In the storage medium, an entrance time 37, an entry toll gate name 38, number plate information 40, and vehicle type information 42 are stored.

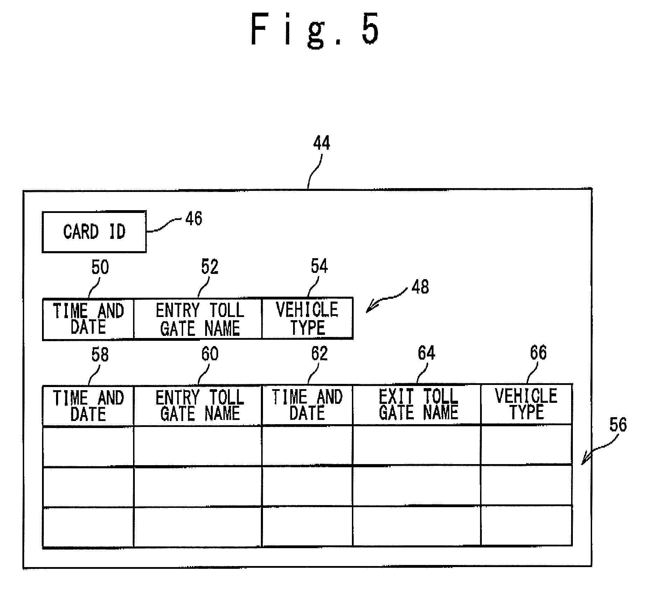

Fig. 5 shows information recorded in an ETC card 44. In an ETC card 44, a card ID 46 which is uniquely allocated to each card and enables to specify the card in distinction from other cards is recorded. Further in the ETC card 44, current driving information 48 is recorded. Regarding a vehicle which enters the toll road from the entry toll gate 2 and in using the toll road, a time and date 50 when the vehicle enters the toll road from the entry toll gate 2, an entry toll gate name 52, and a vehicle type 54 are recorded in the current driving information 48. Further in the ETC card 44, a traffic history 56 is recorded. The traffic history 56 is information regarding past use of the toll road. The traffic history 56 includes a time and date 58 when the vehicle entered the toll road passed through the entry toll gate 2, an entry toll gate name 60, a time and date 62 when the vehicle exited the toll road passed through the exit toll gate 4, an exit toll gate name 66, and a vehicle type 66 showing vehicle type information which was used by an apparatus of a road administrator of the toll road such as the automatic toll collection machine for adjusting a toll.

An operation of the automatic toll collection system of a toll road including above mentioned configuration will be described below. In the description below, the operations of the arithmetic and control device of the automatic toll collection machine 20 which reads the toll calculation program 28 and operates in accordance with procedures written therein is described as operations executed by the program for a convenience of explanation.

A vehicle enters the entry toll gate 2. The vehicle classification unit 6 measures the vehicle and generates vehicle information showing the result of the measurement of the vehicle. The number plate reading device takes a picture of the vehicle, and generates number plate information that is a result of reading characters by executing image recognition processing. The toll ticket issuing machine 11 writes an entrance time 37, an entry toll gate'name 38, number plate information 40, and vehicle type information 42 into a toll ticket 11 and issues the toll ticket. A passenger in the vehicle takes the toll ticket 11 and the vehicle starts from the entry toll gate 2 to travel a toll road.

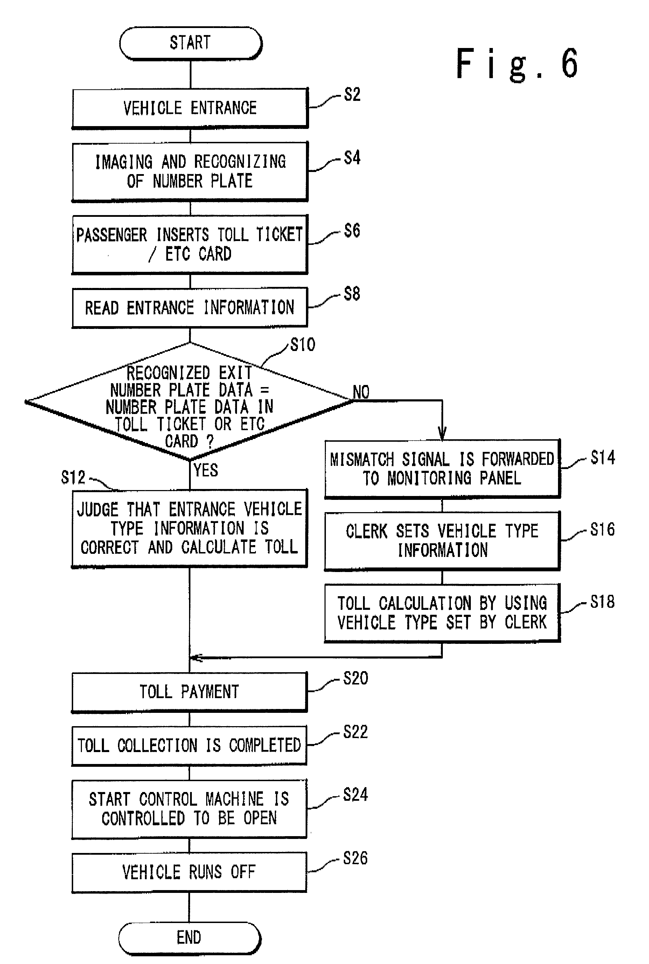

Fig. 6 is a flowchart for explaining an operation of the automatic toll collection system in the exit toll gate 4. When no vehicle exists in the traffic lane 15, the start control machine 16 is controlled to be in a close state. The vehicle enters the traffic lane 15 to exit the toll road in the desired exit toll gate 4. The vehicle entrance detection sensor 22 detects the entrance of the vehicle and transmits a detection signal to the automatic toll collection machine 20 (step S2).

Responding to the detection signal, the number plate reading device 24 takes a picture of the vehicle. Further, exit toll gate number plate information is generated by executing image recognition processing of the taken video picture and is transmitted to the automatic toll collection machine 20 (step S4).

A passenger of the vehicle moves the vehicle along the traffic lane 15 and stops the vehicle near the automatic toll collection machine 20. And, the passenger inserts a toll ticket 11 into an insertion slot for toll tickets provided by the automatic toll collection machine 20 (step S6). The media reading unit 30 reads information recorded in the inserted toll ticket 11 (step S8).

The checking unit 32 checks the exit toll gate number plate information received from the number plate reading device 24 against the number plate information 40 read from the toll ticket 11 (step S10).

When a vehicle type cannot be identified by the vehicle classification unit 6 of the entry toll gate 2, information showing "vehicle type is not identified" is written into the vehicle type information 42 of the toll ticket 42. When the media reading unit 30 reads information of "vehicle type is not identified" at step S8, the same processing of the case where results of the checking are mismatched at step S10 (step S10 NO) is executed in following processing.

Processing of a case where a number plate could not be read is appropriately configured in accordance with circumstances of the exit toll gate 4. For example, when an accuracy of reading by the number plate reading device 24 is dropped off due to the condition of sunlight, if reading of the number plate cannot be realized, by taking the vehicle type information 42 of the toll ticket 11 as reliable, the same processing of a case where results of the checking are matched at step S10 is executed.

The automatic toll collection machine 20 relates the checking result at step S10 to the exit toll gate number plate information and the number plate information 40 read from the toll ticket 11 to store them as a number plate checking history list. This list is displayed in a display device in response to a predetermined input operation to the monitoring panel 26. An administrator side of the toll road can recognize troublesome number plate information by referring the list and checking number plate information whose checking results were mismatched many times.

When the checking result is matched, it can be considered that the toll ticket 11 correctly corresponds to the vehicle in the traffic lane 15 and the vehicle type information 42 recorded in the toll ticket 11 is also valid. Accordingly, the calculation unit 34 calculates the toll based on the vehicle type information read from the toll ticket 11 and displays the toll to the vehicle (step S12).

When the checking result is mismatched at step S10, it cannot be determined whether the vehicle type information 42 recorded in the toll ticket 11 is valid or not. Therefore, the vehicle information requesting unit 36 transmits a mismatch signal showing that the number plate information 40 is not matched with the exit toll gate number plate information to the monitoring panel 26, and requests the monitoring panel 26 for information of the vehicle type (step S14).

When receiving the mismatch signal, the monitoring panel 26 executes outputs showing reception of the mismatch signal to the clerk in the office 14 by using a speaker, lamp, or display. And, an input of a vehicle type is accepted from an input device of the monitoring panel 26. The clerk determines the vehicle type of the vehicle based on the visual observation or the like to input the type (step S16).

The calculation unit 34 calculates the toll by using entry toll gate information 38 read from the toll ticket 11 and the vehicle type information inputted to the monitoring panel 26 by the clerk and displays the toll to the vehicle (step S18).

A passenger of the vehicle pays the toll by inserting payment media such as cash, a credit card, and an ETC card to the automatic toll collection machine 20 (step S20).

The calculation unit 34 executes settlement processing by calculating the toll and returns necessary change (step S22).

When the settlement is normally completed, the automatic toll collection machine 20 transmits a signal for instructing the start control machine 16 to be open. The bar of the start control machine 16 is set to be in the open state (step S24).

The passenger of the vehicle starts the vehicle and runs off the traffic lane 15 (step S126).

According to such an automatic toll collection system, a reliability of the vehicle type information 42 recorded in the toll ticket 11 submitted at the exit toll gate 4 is examined by checking the number plate information 40 written in the toll ticket 11 with number plate information recognized at the exit toll gate 4 by image recognition processing. Due to such processing, even if the identification of a vehicle type by the vehicle classification unit is not performed at the exit toll gate 4, a reliable identification of the vehicle type is possible. As a result, the automatic toll collection is possible without a vehicle classification unit. An irregularity caused by exchanging the toll tickets 11 among a plurality of users in the toll road is prevented by checking the number plates.

The exit toll gate 4 having the arrangement shown in Fig. 2 is suitable for being placed by reforming a manned toll gate (in which the toll collection is realized by a toll collecting person standing by a traffic lane 15). Its construction is implemented as follows.

At first, a toll gate in which a toll collecting person determines a vehicle type by visual observation and a toll collection is performed based on the determined vehicle type is determined as an object to be reformed. An automatic toll collection machine 20 is placed in the toll gate. The number plate reading device 24 for reading a number plate by taking a picture of a vehicle on an upstream side of the automatic toll collection machine 20 is installed. The toll calculation program 28 is installed in the automatic toll collection machine 20.

Since a vehicle classification unit is not installed in the exit toll gate 4, its installation is easy and the construction period is short. Since the island 14 is short, only short extension is required for an island of the manned toll gate, or the island of the manned toll gate can be used without modification.

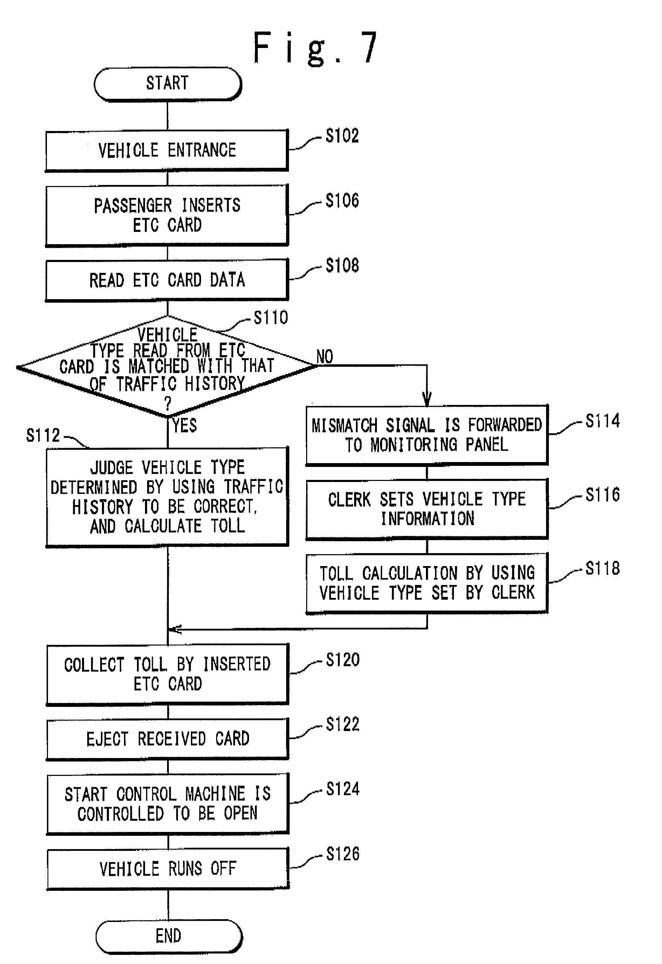

Next, a case where a user pays a toll by using a recording medium (for example, an ETC card) recording past traffic history is explained. In this case, the automatic toll collection system can perform the settlement of the toll without using information of a number plate. Fig. 7 shows an operation of an automatic toll collection system in this case.

In the entry toll gate 2, an on-vehicle transponder communicates with a roadside antenna of the ETC system. Or, a user passes the ETC card 44 to a toll collecting person in the entry toll gate 2. In the ETC card 44, a time 50 and an entry toll gate name 52 are written. In the ETC card 44, a vehicle type 54 identified by the vehicle classification unit 6 installed in the entry toll gate 2 is further written.

When no vehicle exists in the traffic lane 15, the start control machine 16 is controlled to be in a close state. A vehicle enters the traffic lane 15 to exit the toll road at a desired exit toll gate 4. The vehicle entrance detection sensor 22 detects entrance of the vehicle and transmits a detection signal to the automatic toll collection machine 20 (step S102).

A passenger of the vehicle moves the vehicle along the traffic lane 15 and stops the vehicle near the automatic toll collection machine 20. Then, the passenger inserts the ETC card 44 into the insertion slot for ETC cards of the automatic toll collection machine 20 (step S106). The media reading unit 30 reads information recorded in the ETC card 44 (step S108).

In information read from the ETC card 44, the checking unit 32 checks the vehicle type 54 written at the entry toll gate 2 against the vehicle type 66 in the traffic history 56. The checking unit 32 determines the vehicle type 54 as reliable information if the result of the checking meets a predetermined standard, and determines the vehicle type 54 to be unreliable information if not meeting the predetermined standard. When only the history under a predetermined number of times is recorded as the traffic history 56, the vehicle type 54 is determined as unreliable information (step S110).

The predetermined standard means a condition where the vehicle type 66 recorded in the traffic history 56 is consistent. The consistency is, for example, configured as follows. It is determined that the vehicle type 54 is reliable information when the vehicle type 54 is matched with the vehicle types 66 in the recent traffic history 56 of the predetermined number of times and only at that time. Or, it is determined that the vehicle type 54 is reliable information only when the vehicle type 54 is matched with all of the vehicle types 66 listed in the traffic history 56.

The vehicle type 66 in the traffic history 56 is uncertain in some cases. For example, in some entry recorded in the traffic history 56, the vehicle type 66 may be shown as "compact or mid," that is, a compact or a mid-size vehicle. In that case, it is determined that the consistency is assured if the vehicle type 54 and the vehicle type 66 in the traffic history 56 are not inconsistent with each other, and the vehicle type 54 is determined to be reliable.

When the vehicle type 54 is judged to be reliable, the calculation unit 34 calculates the toll based on the vehicle type 54 and displays the toll to the vehicle (step S112).

When it is determined that the vehicle type 54 is not reliable information at step S110, the vehicle information requesting unit 36 transmits a caution signal showing that the vehicle type 54 lacks a reliability to the monitoring panel 26, and requests the monitoring panel 26 for information of a vehicle type (step S114).

When receiving the caution signal, the monitoring panel 26 executes outputs showing reception of the caution signal to the clerk in the office 14 by using a speaker, lamp, or display. And, an input of a vehicle type is accepted by an input device of the monitoring panel 26. The clerk determines the vehicle type of the vehicle with visual observation or the like to input the type (step S116).

The calculation unit 34 calculates the toll by using the entry toll gate name 52 read from the ETC card 44 and the vehicle type information inputted to the monitoring panel 26 by the clerk and displays the toll to the vehicle (step S118).

The automatic toll collection machine 20 executes the settlement of a toll by using the inserted ETC card 44 (step S120).

When the settlement of the toll is normally completed, the automatic toll collectionmachine 20 returns the ETC card 44 to the vehicle in the traffic lane 15 (step S122).

The automatic toll collection machine 20 transmits a signal for instructing the start control machine 16 to be open. The bar of the start control machine 16 is set to be in the open state (step S124).

The passenger of the vehicle starts the vehicle and runs off the traffic lane 15 (step S126).

The automatic toll collection system explained above determines the reliability of current vehicle type information based on past vehicle type information in a medium storing past traffic history such as an ETC card. Vehicle type information of the ETC card by which toll processing for a vehicle of a particular type is normally performed repeatedly in past time is reliable. For this reason, a toll collection based on the correct vehicle type is possible even if the vehicle classification unit is not installed in the exit toll gate 4.

It is assumed that the toll road is regulated such that all users pay their tolls by using the medium storing past traffic history such as the ETC card. In this case, to all vehicles, it is possible to perform the toll collection through the operation described with referring to Fig. 7. In such a toll road, the number plate reading device 24 in the exit toll gate 4 shown in Fig. 2 is not required.

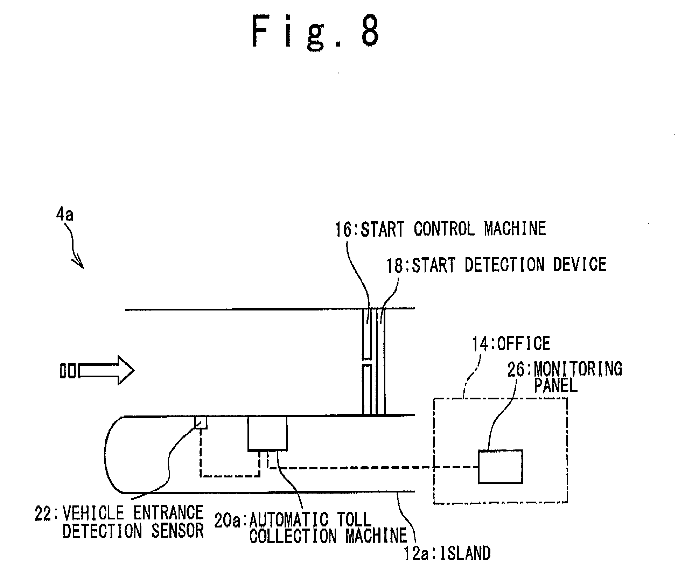

Fig. 8 shows such an exit toll gate 4a of the toll road. In an automatic toll collection machine 20a, a program for performing a toll collection based on checking of a number plate is not installed. Since no number plate reading device is installed in an island 12a of the exit toll gate 4a, the island 12a has a margin in space where apparatuses can be installed compared to the case shown in Fig. 2. Alternatively, the island 12a can be further smaller.

## Claims

1. An automatic toll collection system comprising:
a number plate reading unit configured to take a picture of a vehicle which enters a traffic lane in a toll gate and to extract exit number plate information from an area in the picture where a number plate is taken;
a medium reading unit configured to read vehicle type information and number plate information from a recording medium provided from a vehicle in the traffic lane;
a checking unit configured to check a matching of the exit number plate information and the number plate information; and
a calculation unit configured to calculate a toll based on the vehicle type information when a result of the matching is matched.

2. The automatic toll collection system according to claim 1, further comprising:
a vehicle detection sensor configured to detect a vehicle existing in an upstream side of an automatic toll collection machine in an exit toll gate, and
the number plate reading unit takes the picture in response to a detection of a vehicle by the vehicle detection sensor.

3. The automatic toll collection system according to claim 2, further comprising:
an output unit configured to output a predetermined output to a clerk in charge when a result of the matching is not matched; and
a collection unit configured to collect inputted vehicle type information from a clerk in charge via an input device,
wherein the calculation unit calculates the toll by using the inputted vehicle type information.

4. The automatic toll collection system according to any of claims 1 to 3, further comprising:
a vehicle classification unit configured to generate an entrance vehicle information indicating a vehicle type of a vehicle which enters an entry toll gate;
an entrance number plate reading unit configured to read a number plate of a vehicle which enters the entry toll gate; and
an issuing unit configured to record the entrance vehicle type information as the vehicle type information and a number plate read by the entrance number plate reading unit as the number plate information in the recording medium and issue the recording medium,
wherein the number plate reading unit and the medium reading unit are installed in an exit toll gate placed in a downstream side of the entry toll gate.

5. The automatic toll collection system according to any of claims 1 to 3, wherein the medium reading unit reads vehicle type history information recorded in the recording medium and including information of vehicle type used to calculate a toll in past usage of the recording medium, and
the calculation unit calculates a toll by using information of vehicle type recorded in the vehicle type history information when the vehicle type history information satisfies a predetermined condition.

6. An automatic toll collection system comprising:
a medium recording unit configured to read a vehicle type history information including information of vehicle type used to calculate a toll in each of a plurality of past passages from a recording medium; and
a calculation unit configured to calculate a toll by using information of vehicle type recorded in the vehicle type history information when the vehicle type history information satisfies a predetermined condition.

7. The automatic toll collection system according to claim 6, wherein the predetermined condition is a condition where all information indicating all information showing a plurality of vehicle types included in the vehicle type history information are consistent.

8. A construction method of an automatic toll collection system comprising:
installing a toll collection machine configured to read vehicle type information and number plate information from a recording medium provided by a passenger of a vehicle to calculate a toll in a toll gate where a toll collection is performed based on a vehicle type identified by a person in charge;
installing a camera configured to take a picture of a vehicle on an upstream side of the toll collection machine in the toll gate; and
installing a program configured to calculate a toll based on the vehicle information when a result of matching information regarding a number plate extracted from the picture with the number plate information is matched into the toll collection machine.
